# EUROPEAN PATENT SPECIFICATION

(11) **EP 1 916 026 B1**
(45) Date of publication and mention of the grant of the patent: **25.11.2009**
(21) Application number: 07118326.3
(22) Date of filing: 11.10.2007
(51) Int. Cl.: B01D 46/00, B01D 46/10, B65D 51/16, F01M 13/04, F15B 21/04

(54) **Hydraulic fluid reservoir with filter**
Hydraulikflüssigkeitsbehälter mit Filter
Réservoir de fluide hydraulique doté d'un filtre

(30) Priority: 25.10.2006 US 586404
(43) Date of publication of application: 30.04.2008
(73) Proprietor: Deere & Company, Moline, IL 61265-8098 (US)
(72) Inventor: Marvin, Paul D, DeWitt, IA 52742 (US)
(74) Representative: Holst, Sönke

(56) References cited:
- EP-A- 1 647 320
- WO-A-2004/080570
- GB-A- 2 094 168
- US-A- 3 281 513
- US-A- 5 341 951
- US-A1- 2002 158 073

## Description

This invention relates generally to hydraulic systems. More particularly, it relates to air pre-filters for hydraulic systems.

Hydraulic systems typically comprise a hydraulic actuator that is coupled through conduits to hydraulic reservoir and a hydraulic pump. The hydraulic pump provided hydraulic fluid under pressure. This hydraulic fluid is conducted to a hydraulic actuator which performs useful movement. The hydraulic reservoir receives hydraulic fluid after it has passed through the hydraulic actuator and stores it at atmospheric pressure for reuse by the pump.

Hydraulic reservoirs must be sized sufficient to receive and contain all excess fluid in the system that is not kept in the pump and in the actuator. Hydraulic reservoirs are cyclically filled and emptied of hydraulic fluid as the hydraulic system operates.

Since hydraulic reservoirs are typically maintained at atmospheric pressure, air is permitted to pass into the reservoir to make up for hydraulic fluid to compensate for changing levels of hydraulic fluid in the reservoir. To get into or out of the tank, air typically passes through a hydraulic fluid fill tube or hydraulic fluid inlet that is fixed to the upper surface of the reservoir. The hydraulic fluid inlet also permits the hydraulic fluid reservoir to be replenished with hydraulic fluid that leaks or otherwise escapes from the hydraulic system. The hydraulic fluid inlet is typically enclosed at its upper end by a breather cap. The breather cap permits the reservoir to breathe by conducting air through openings on the surface of the breather cap and into (or out of) the hydraulic fluid reservoir.

To prevent contaminants from entering the reservoir, breather caps include internal filters. These filters block the passage of dust, dirt, and other contaminants entrained in the surrounding air that is on into the reservoir. Typically the breather cap is removed only to add hydraulic fluid to the reservoir. An hydraulic fluid reservoir according to the pre-amble of claim 1 is described in US 6 585 128 B2.

WO 2004/080570 A1 describes a ventilation filter for an oil tank. The filter is mounted upon a connecting line leading into the oil tank and comprises a hollow cap with an annular, lower opening through which air can enter the cap, flow through two layers of filter material and finally into the oil tank.

US 3 281 513 A and GB 2 094 168 A describe fluid filters having annular shapes and consisting of a porous polymeric material.

One drawback is that breather caps are often permanently sealed together. They cannot be easily disassembled for cleaning when the internal filter of the breather cap becomes plugged with contaminants. If the internal filter is not cleaned, dirty air may bypass the filter element and enter the reservoir.

What is needed, therefore, is a means for extending the lifespan of the breather cap by prefiltering outside air before it reaches the internal filter of the breather cap. It is an object of this invention to provide a hydraulic fluid reservoir having such a filter.

This object is achieved with the subject matter of claim 1. The dependent claims recite advantageous embodiments of the invention.

In accordance with the invention, a hydraulic fluid reservoir is provided, comprising a tank configured to hold hydraulic fluid at atmospheric pressure; a hydraulic fluid inlet fixed to and extending from the tank; a breather cap removably coupled to a free end of the hydraulic fluid inlet and including an air filter element; and an air pre-filter removably coupled to the hydraulic fluid inlet and abutting the breather cap to filter air before it enters the breather cap.

The breather cap has a plurality of apertures extending through an outer surface thereof to communicate air through said breather cap and into the tank, and the air pre-filter abuts the breather cap to prevent outside air from entering the apertures without first passing through the air pre-filter. The air pre-filter comprises an porous polymeric material ring disposed about a circumferential surface of the hydraulic fluid inlet. The air pre-filter may be spaced slightly apart from the apertures to thereby enclose the apertures and provide an air outlet surface of the air pre-filter having a greater surface area than the combined area of the apertures. The air pre-filter defines a generally cylindrical outer wall, and the outer wall can further comprise a downwardly extending circumferential ring disposed to prevent fluids from wetting a bottom surface of the air pre-filter.

The body of the air pre-filter may comprise flexible open cell foam. The cylindrical body may have a cylindrical outer wall, and further wherein the cylindrical body comprises a flexible skin bonded to at least a portion of the cylindrical outer wall. The air pre-filter may further comprise a filter support configured to be fixed to the surface of the hydraulic inlet tube and to extend outwardly therefrom to support the cylindrical body on the hydraulic fluid inlet tube.

An embodiment of the invention is shown in the drawings, in which:
FIGURE 1 illustrates a hydraulic reservoir in accordance with the present invention.
FIGURE 2 is a fragmentary cross-sectional view of the reservoir of FIGURE 1 taken at section line 2-2 in FIGURE 1.
FIGURE 3 is a cross-sectional view of the hydraulic fluid inlet and breather cap of FIGURE 2, taken at section line 3-3 in FIGURE 2.
FIGURE 4 is a cross-sectional view of the air pre-filter and hydraulic fluid inlet of FIGURES 1-2 taken at section line 4-4 in FIGURE 2.
FIGURE 5 is a longitudinal, axial cross-sectional view of an alternative filter on the hydraulic fluid inlet of FIGURES 1-4 mounted identically on the hydraulic fluid inlet.

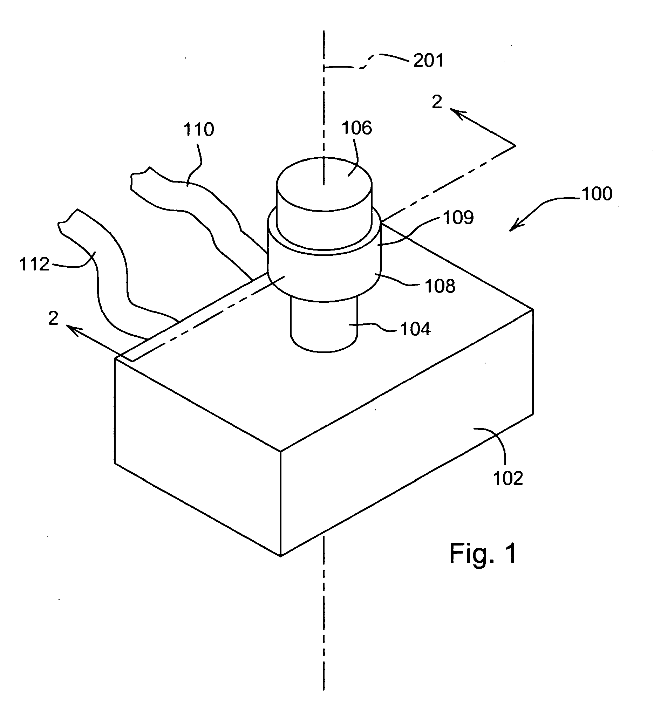

In the figures, like numbered items represent the same part. Referring now to FIGURES 1-4, a hydraulic fluid reservoir 100 is illustrated, that comprises a tank 102, a hydraulic fluid inlet 104, a breather cap 106, and an air pre-filter 108. The hydraulic fluid inlet 104, the breather 106, and the air pre-filter 108, are all symmetric about longitudinal axis 201. Hydraulic lines 110, 112 in fluid communication with hydraulic fluid reservoir 100 are provided to conduct hydraulic fluid to the hydraulic pump (not shown) and back to the hydraulic fluid reservoir 100 from the hydraulic actuators (not shown).

Tank 102 may be of any arrangement capable of containing a quantity of hydraulic fluid. Typically, tank 102 is a metal chamber of a generally box-like configuration. It may be made of any other material capable of containing hydraulic fluid, and may have a variety of internal and external contours. An example can be seen in US 6 585 128 B2.

Hydraulic fluid inlet 104 provides an opening to tank 102 that is capable of receiving hydraulic fluid and transmitting it into the tank. In the preferred embodiment, shown here, hydraulic fluid inlet 104 is a circular tube that is welded or otherwise fixed to an aperture in the top of tank 102.

Breather cap 106 is fixed to the upper, free end of hydraulic fluid inlet 104 to permit airflow into tank 102 and to reduce the chance of dirt and other contaminants entering the tank. Breather cap 106 is fixed to the upper end of hydraulic fluid inlet 104. In the preferred embodiment, shown here, breather cap 106 is preferably a generally cylindrical and metallic body coaxial with the tube that forms hydraulic fluid inlet 104. Other configurations such as rectangular caps, oval caps, hemispherical caps, are acceptable. Other materials, such as plastic, are also acceptable.

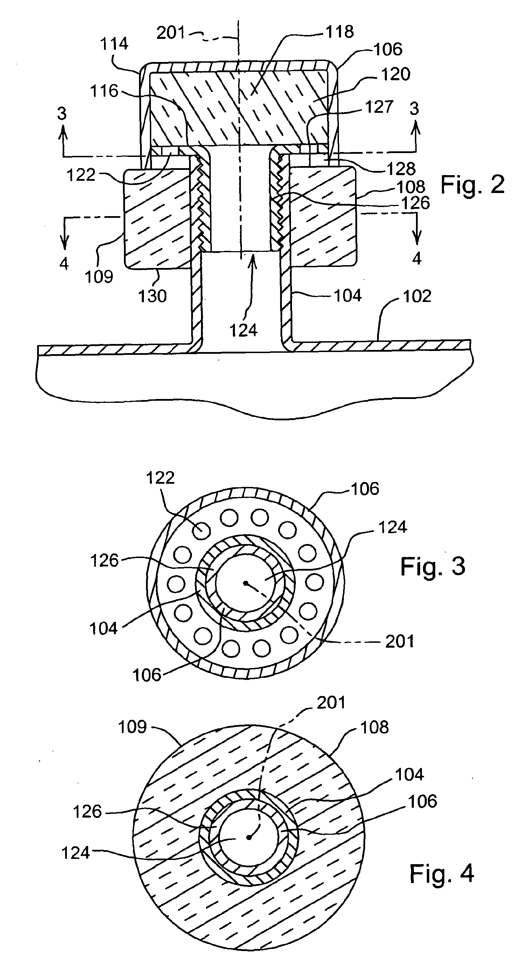

Air pre-filter 108 abuts the lower edge of cap 106. It filters air pulled into the hydraulic fluid reservoir before the air enters breather cap 106. Since this filtering occurs before the air is drawn into breather cap 106, it is called a "prefilter". In the preferred embodiment, shown here, air pre-filter 108 is a generally cylindrical tubular body (FIG. 4). It extends about and seals against the outside surface of hydraulic fluid inlet 104. The upper end of air pre-filter 108 abuts a lower surface or edge of breather cap 106.

Air pre-filter 108 is made out of a porous polymeric material, such as a flexible, elastic, open cell, porous expanded foam. It is preferably a monolithic body, having substantially the same constituency and structure throughout. It provides an air resistance low enough to maintain air in the tank at atmospheric pressure.

To increase the filtration capacity of air pre-filter 108, the outer surface of the air pre-filter may be covered with a skin 109 that is thin and does not pass contaminated air therethrough. In the preferred embodiment, this skin may be formed integral with the body of air pre-filter 108 during a foam expansion process that forms the body of the air pre-filter. The skin 109 can be formed on the outer surface of air pre-filter 108 that is exposed to the environment except the doughnut-shaped bottom surface 130.

The effect is to prevent air from entering air pre-filter 108 on its way through breather cap 106 and into tank 102 except where the skin does not exist -- the bottom surface 130. In the embodiment with a skin, only bottom surface 130 functions as an atmospheric inlet or outlet for air pre-filter 108. Requiring air to enter air pre-filter 108 only through bottom surface 130 forces air to pass through substantially the entire length of air pre-filter 108, from bottom to top, before it is drawn into breather cap 106 and thence into tank 102.

Any region of the outer surface can have a skin fixed thereto to prevent air from entering the air pre-filter 108 in that region. Alternatively, the outer surface of the air pre-filter 108 can have no skin 109 at all.

Skin 109 does not need to be formed integral with the air pre-filter 108 during the foam expansion process, however. Skin 109 may be painted on the outer surface, or alternatively it may be provided as a separate mechanical shell in which air pre-filter 108 is disposed, such as a lightweight metal or plastic cylinder. If air pre-filter 108 is bonded permanently to skin 109, it is preferable that the skin 109 be flexible, to permit air pre-filter 108 to be more easily cleaned, for example, by repeatedly and manually compressing and expanding the foam in a solvent material such as soapy water or a light solvent.

FIGURE 2 illustrates the tank 102, hydraulic fluid inlet 104, cap 106, and air pre-filter 108, which are shown in cross-section. Breather cap 106 is formed as an upper shell 114 to which a lower shell 116 is fixed, preferably permanently. These two shells form therebetween a cavity 118 in which an air filter element 120 is disposed. The air filter element 120 may include a series of labyrinthine passages formed by multiple plates or disks of metal. It may include one or more layers of woven wire or fabric cloth. It may include one or more layers of open cell expanded foam. In a preferred embodiment, shown here, air filter element 120 is an open cell expanded foam body.

Air filter element 120 abuts lower shell 116 and seals against a plurality of apertures 122 formed in the lower shell 116. Apertures 122 pass through lower shell 116 and provide an opening for air to be drawn into or expelled from hydraulic fluid reservoir 100. Apertures 122 are circular and are arranged in a circle that extends about the periphery of hydraulic fluid inlet 104 (FIG. 3).

While this is the preferred embodiment, any arrangement or shape of apertures that permits air from the ambient environment to pass into cavity 118 and thence into tank 102 is acceptable. In the preferred embodiment, shown herein, the sealing of air pre-filter 108 against the bottom edge of upper shell 114 simultaneously prevents all the air from the environment from entering all of apertures 122. This is advantageous in that each aperture 122 need not be equipped with its own air pre-filter, and instead air pre-filter 108 in the form of a single monolithic structure can be provided for all of the apertures 122 on the underside of breather 106.

Air filter element 120 also abuts a central aperture 124 that passes through lower shell 116 and provides a communicating path between air filter element 120 and the inside of tank 102. It simultaneously encloses all of the apertures 122 by making contact with the bottom edge of upper shell 114.

Aperture 124 passes through a tubular section 126 of lower shell 116 that abuts the inside surface of hydraulic fluid inlet 104. The outer surface of tubular section 126 is preferably threadedly engaged to the inner surface of hydraulic fluid inlet 104. In an alternative arrangement, tubular section 126 of lower shell 116 may be eliminated and replaced with a simple aperture having mechanical couplings, such as bayonet mounts, that are configured to mate with corresponding mechanical couplings formed in the upper end of hydraulic fluid inlet 104.

Air filter element 120 seals against interior surfaces of cap 106 that extend between apertures 122 (which communicate the inner surface of cap 106 and cavity 118 to the ambient environment) and aperture 124 (which communicates the inner surface of cap 106 and cavity 118 to the interior of the tank). Air filter element 120 thereby defines a passage for filtered air that extends between the ambient environment outside tank 102 and the environment inside tank 102.

In the preferred embodiment, air pre-filter 108 does not contact and seal against each of the apertures 122 individually, but instead seals against the bottom edge of upper shell 114. This defines an annular upper surface 127 (FIGURE 2) on the upper surface of air pre-filter 108 that is not compressed against apertures 122 or lower shell 116. It is this upper surface that forms the outlet of air pre-filter 108.

When hydraulic fluid is withdrawn from tank 102, air is drawn into air pre-filter 108 from the outside environment. This air is pulled into air pre-filter 108 into the outwardly facing surfaces of air pre-filter 108 that are not covered by skin 109, i.e. surface 130. The air passes through air pre-filter 108 and exits through the entire large annular upper surface 127 of the air pre-filter 108. The air leaving surface 127 passes into a cavity 128 defined between lower shell 116 and surface 127. Once it has passed through this cavity, the air enters apertures 122 and passes into cavity 118 of breather cap 106.

Cavity 128 is advantageous. It permits a significantly larger portion of air pre-filter 108 to be used for filtering. By spacing the air pre-filter 108 away from direct contact with apertures 122, the reduced air pressure in tank 102 generated by the hydraulic fluid volume dropping in tank 102 and the resultant drop in air pressure in the tank can act upon the entire annular upper surface 127 and thereby provide a much larger outlet for air pre-filter 108.

If air pre-filter 108 was pressed against apertures 122, the only outlet to the air pre-filter 108 would be the small circular portions of air pre-filter 108 that abutted apertures 122. This would provide greater resistance to air flow through air pre-filter 108. As illustrated herein, however, with the top surface of air pre-filter 108 spaced away from apertures 122, the filtering capacity and the airflow resistance of air pre-filter 108 is decreased. Of course, the hydraulic fluid reservoir can also be operated with air pre-filter 108 in abutment to apertures 122.

Air pre-filter 108 is preferably formed as a monolithic body in the form of a right circular cylinder. It is preferably formed of an elastic and porous open cell foam. It preferably has an inner diameter slightly smaller than the outer diameter of the hydraulic fluid inlet 104 to which it is attached, and an outer diameter slightly larger than the outer diameter of breather cap 106. The smaller inner diameter of air pre-filter 108 causes it to be stretched when it is pulled over hydraulic fluid inlet 104 and to then relax (when released) and grasp the outer surface of hydraulic fluid inlet 104 firmly. In this manner, the operator can move air pre-filter 108 up or down along the outer surface of hydraulic fluid inlet 104 until the air pre-filter 108 seals upper surface 126 properly against the bottom edge of breather cap 106 with no air leakage therebetween.

Air pre-filter 108 is preferably not adhesively attached to hydraulic fluid inlet 104. This permits air pre-filter 108 to be more easily removed and cleaned. To clean the air pre-filter, the operator removes breather cap 106, and slides air pre-filter 108 up and off the upper end of hydraulic fluid inlet 104. To install air pre-filter 108, the operator removes breather cap 106 and slides air pre-filter 108 down over the free end of hydraulic fluid inlet 104. The operator then replaces breather cap 106, fixing it to the upper end of hydraulic fluid inlet 104, and adjusts air pre-filter 108 upward or downward along hydraulic fluid inlet 104 until it is sealed sufficiently against breather cap 106.

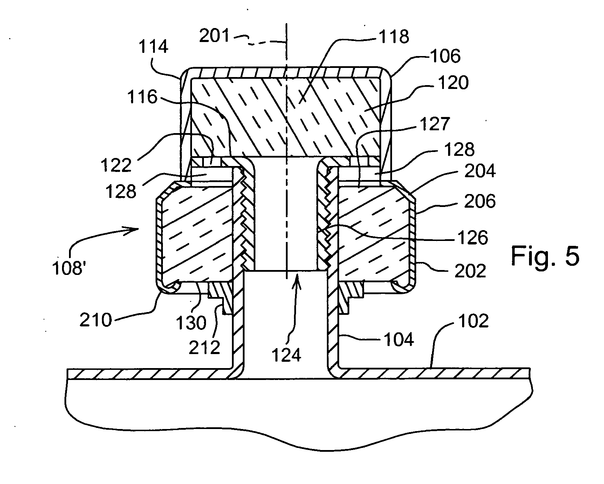

FIGURE 5 illustrates an alternative embodiment of air pre-filter 108 mounted on the same tank, hydraulic fluid inlet and breather cap described above. In FIGURE 5, the alternative embodiment is identified as item 108'. It is shown together with breather cap 106 and hydraulic fluid inlet 104. Air pre-filter 108', breather cap 106, and hydraulic fluid inlet 104, are all symmetric about longitudinal axis 201. Air pre-filter 108' is constructed and cooperates with the other components of the hydraulic fluid reservoir 100 in a manner identically to that of air pre-filter 108 described above with the following differences.

Air pre-filter 108' has a skin 202 constructed and arranged the same as skin 109 of air pre-filter 108. Air pre-filter 108' has a sloping upper surface 204 formed as a frustum of a cone that slopes downward and outward away from breather cap 106. Surface 204 is covered with skin 202.

Air pre-filter 108' has a generally circular and cylindrical side wall 206 that is also covered with skin 202. Skin 202 extends downward laid covering the entire upwardly facing an outwardly facing surfaces of air pre-filter 108'. Skin 202 prevents water or other liquid contaminants from being drawn into air pre-filter 108'. Any liquid material falling on air pre-filter 108' drips down side wall 204 outward and away from the abutting junction between sidewall 204 and the bottom edge of upper shell 114. It drips down sidewall 206 and gathers at the bottom edge 208 of air pre-filter 108'.

Like air pre-filter 108, air pre-filter 108' has a large annular open top surface 127 which is disposed within cavity 128 and preferably spaced away from apertures 122. Surface 127 forms the air pre-filter 108' airflow outlet, as described above, when air is pulled through air pre-filter 108' and into tank 102.

Like air pre-filter 108, air pre-filter 108' has a lower surface portion 130 that is not covered with skin 109 to permit airflow therethrough. This forms an air inlet in air pre-filter 108', as described above, when air is pulled through the air pre-filter 108' and into tank 102. In the embodiment of FIGURE 5, surface 130 is recessed upward above an outer circumferential ring 210 that forms the lower and outer portion of sidewall 206. Ring 210 extends below surface 130 to insure that water or other liquids dripping down the outside of sidewall 206 drip on tank 102 and do not run across surface 130 which would otherwise wet it and reduce airflow through it.

The embodiment of FIGURE 5 also has a filter support 212 that is disposed to support air pre-filter 108' and prevent it from sliding down the tube that forms hydraulic fluid inlet 104. Support 212 is preferably a flexible plastic ring. Support 212 is removably fixed to hydraulic fluid inlet 104. It is frictionally engaged with hydraulic fluid inlet 104 such that it can be manually moved up and down to an optimum position and manually moved upward and off the free upper end of hydraulic fluid inlet 104 when breather cap 106 is removed. In an alternative embodiment, it may be a hose clamp, or it may be formed integrally with hydraulic fluid inlet 104 to provide a ridge, groove, shelf, or other protrusion extending outward from that portion of hydraulic fluid inlet 104 about which air pre-filter 108' extends. In the illustrated embodiment, filter support 212 is a ring having an "L"- shaped cross-section.

## Claims

1. A hydraulic fluid reservoir (100), comprising:
a tank (102) configured to hold hydraulic fluid at atmospheric pressure;
a hydraulic fluid inlet tube (104) fixed to and extending from the tank (102);
a breather cap (106) removably coupled to a free end of the hydraulic fluid inlet tube (104), the breather cap (106) including an air filter element (120) and having a plurality of apertures (122) extending through an outer surface thereof to communicate air through said air filter element (120) and into the tank (102),
**characterized by** an air pre-filter (108, 108') removably coupled to the hydraulic fluid inlet (104) and abutting the breather cap (106) to filter air before it enters the breather cap (106), the air pre-filter (108, 108') comprising:
a body made of a porous polymeric material and having a longitudinal axis, an inner cylindrical wall, an outer cylindrical wall (206) and a first axially facing outlet, wherein the inner cylindrical wall is supported on an outer surface of a hydraulic fluid inlet tube (104), and further wherein the first axially facing outlet abuts and seals against the breather cap (106) of the hydraulic fluid reservoir (100) and prevents outside air from entering the apertures (122) without first passing through the air pre-filter (108, 108').

2. The hydraulic fluid reservoir (100) of claim 1, wherein the body comprises flexible open cell foam.

3. The hydraulic fluid reservoir (100) of claim 1 or 2, wherein the body comprises a flexible skin (109, 202) bonded to at least a portion of the cylindrical outer wall.

4. The hydraulic fluid reservoir (100) of one of claims 1 to 3, further comprising a filter support (212) fixed to the surface of the hydraulic inlet tube (104) and extending outwardly therefrom and supporting the body on the hydraulic fluid inlet tube (104).

5. The hydraulic fluid reservoir (100) of one of claim1 to 4, wherein the air pre-filter (108, 108') is spaced slightly apart from the apertures (122) to thereby enclose the apertures (122) and provide an air outlet surface of the air pre-filter (108, 108') having a greater surface area than the combined area of the apertures (122).

6. The hydraulic fluid reservoir of one of claims 1 to 5, wherein the air pre-filter (108, 108') defines a generally cylindrical outer wall, and the outer wall further comprises a downwardly extending circumferential ring (210) disposed to prevent fluids from wetting a bottom surface of the air pre-filter (108, 108').

## Patentansprüche

1. Hydraulikflüssigkeitsbehälter (100), umfassend:
einen Tank (102), der zum Halten von Hydraulikflüssigkeit auf Atmosphärendruck konfiguriert ist;
ein Hydraulikflüssigkeitseinlassrohr (104), das an dem Tank (102) befestigt ist und sich von diesem erstreckt;
eine Entlüfterkappe (106), die entfernbar mit einem freien Ende des Hydraulikflüssigkeitseinlassrohrs (104) verbunden ist, wobei die Entlüfterkappe (106) ein Luftfilterelement (120) enthält und mehrere Öffnungen (122) aufweist, die sich durch eine Außenfläche davon erstrecken, um Luft durch das Luftfilterelement (120) und in den Tank (102) weiterzuleiten,
**gekennzeichnet durch** einen Luftvorfilter (108, 108'), der lösbar mit dem Hydraulikflüssigkeitseinlass (104) verbunden ist und an der Entlüfterkappe (106) anliegt, um Luft zu filtern, bevor sie in die Entlüfterkappe (106) eintritt, wobei der Luftvorfilter (108, 108') Folgendes umfasst:
einen Körper, der aus einem porösen polymeren Material hergestellt ist und eine Längsachse, eine innere zylindrische Wand und eine äußere zylindrische Wand (206) sowie einen ersten, in Axialrichtung weisenden Auslass aufweist, wobei die innere zylindrische Wand an einer Außenfläche des Hydraulikflüssigkeitseinlassrohrs (104) gestützt wird, und wobei weiterhin der erste, in Axialrichtung weisende Auslass an der Entlüfterkappe (106) des Hydraulikflüssigkeitsbehälters (100) anliegt und sie abdichtet und verhindert, dass Außenluft in die Öffnungen (122) eintritt, ohne erst den Vorfilter (108, 108') zu durchströmen.

2. Hydraulikflüssigkeitsbehälter (100) nach Anspruch 1, wobei der Körper flexiblen, offenzelligen Schaumstoff umfasst.

3. Hydraulikflüssigkeitsbehälter (100) nach Anspruch 1 oder 2, wobei der Körper eine flexible Haut (109, 202) umfasst, die mit mindestens einem Teil der zylindrischen Außenwand verbunden ist.

4. Hydraulikflüssigkeitsbehälter (100) nach einem der Ansprüche 1 bis 3, der weiterhin eine Filterstütze (212) umfasst, die an der Fläche des Hydraulikeinlassrohrs (104) befestigt ist und sich davon nach außen erstreckt und den Körper an dem Hydraulikflüssigkeitseinlassrohr (104) stützt.

5. Hydraulikflüssigkeitsbehälter (100) nach einem der Ansprüche 1 bis 4, wobei der Luftvorfilter (108, 108') etwas von den Öffnungen (122) beabstandet ist, um dadurch die Öffnungen (122) zu umschließen und eine Luftauslassfläche des Luftvorfilters (108, 108') mit einer größeren Oberfläche als die kombinierte Fläche der Öffnungen (122) bereitzustellen.

6. Hydraulikflüssigkeitsbehälter nach einem der Ansprüche 1 bis 5, wobei der Luftvorfilter (108, 108') eine allgemein zylindrische Außenwand definiert und die Außenwand weiterhin einen sich nach unten erstreckenden Umfangsring (210) umfasst, der dazu angeordnet ist, zu verhindern, das Flüssigkeit eine Unterseite des Luftvorfilters (108, 108') benetzt.

## Revendications

1. Réservoir de fluide hydraulique (100), comprenant:
un conteneur (102) configuré pour retenir du fluide hydraulique à la pression atmosphérique ;
un tube d'entrée de fluide hydraulique (104) fixé au conteneur (102) et s'étendant depuis celui-ci ;
un chapeau de reniflard (106) accouplé de manière amovible à une extrémité libre du tube d'entrée de fluide hydraulique (104), le chapeau de reniflard (106) comportant un élément de filtre à air (120) et ayant une pluralité d'ouvertures (122) s'étendant à travers une surface externe de celui-ci pour faire communiquer de l'air à travers ledit élément de filtre à air (120) dans le conteneur (102),
**caractérisé par** un préfiltre à air (108, 108') accouplé de manière amovible à l'entrée de fluide hydraulique (104) et en butée contre le chapeau de reniflard (106) pour filtrer l'air avant qu'il n'entre dans le chapeau de reniflard (106), le préfiltre à air (108, 108') comprenant :
un corps fabriqué en matériau polymère poreux et ayant un axe longitudinal, une paroi cylindrique interne, une paroi cylindrique externe (206) et une première sortie orientée axialement, la paroi cylindrique interne étant supportée sur une surface externe d'un tube d'entrée de fluide hydraulique (104), et la première sortie orientée axialement venant en outre buter contre le chapeau de reniflard (106) du réservoir de fluide hydraulique (100) et sceller celui-ci et empêchant l'air extérieur d'entrer dans les ouvertures (122) sans d'abord passer à travers le préfiltre à air (108, 108').

2. Réservoir de fluide hydraulique (100) selon la revendication 1, dans lequel le corps comprend une mousse à cellules ouvertes flexible.

3. Réservoir de fluide hydraulique (100) selon la revendication 1 ou 2, dans lequel le corps comprend une peau flexible (109, 202) collée à au moins une portion de la paroi externe cylindrique.

4. Réservoir de fluide hydraulique (100) selon l'une quelconque des revendications 1 à 3, comprenant en outre un support de filtre (212) fixé à la surface du tube d'entrée hydraulique (104) et s'étendant vers l'extérieur depuis celui-ci et supportant le corps sur le tube d'entrée de fluide hydraulique (104).

5. Réservoir de fluide hydraulique (100) selon l'une quelconque des revendications 1 à 4, dans lequel le préfiltre à air (108, 108') est légèrement espacé des ouvertures (122) pour ainsi enfermer les ouvertures (122) et fournir une surface de sortie d'air du préfiltre à air (108, 108') ayant une plus grande superficie que la surface combinée des ouvertures (122).

6. Réservoir de fluide hydraulique selon l'une quelconque des revendications 1 à 5, dans lequel le préfiltre à air (108, 108') définit une paroi externe généralement cylindrique, et la paroi externe comprend en outre une bague circonférentielle (210) s'étendant vers le bas et prévue pour empêcher que des fluides ne mouillent une surface inférieure du préfiltre à air (108, 108').
